Europäisches Patentamt

European Patent Office

Office européen des brevets

(11) Numéro de publication: **0 438 932 A1**

# DEMANDE DE BREVET EUROPEEN

(21) Numéro de dépôt: 90403345.3

(22) Date de dépôt: 27.11.90

(51) Int. Cl.⁵: **G05D 16/20, F04B 49/02**

(30) Priorité: **23.01.90 FR 9000721**

(43) Date de publication de la demande:
**31.07.91 Bulletin 91/31**

(84) Etats contractants désignés:
**DE ES GB IT**

(71) Demandeur: **REGIE NATIONALE DES USINES RENAULT S.A.**
**34, Quai du Point du Jour**

**F-92109 Boulogne Billancourt Cédex(FR)**

(72) Inventeur: **Merletti, Didier**
**26, avenue Foch**
**F-69230 Saint-Genis-Laval(FR)**

(74) Mandataire: **Ernst-Schonberg, Michel et al**
**REGIE NATIONALE DES USINES RENAULT**
**SA, Sce 0267, 860, quai de Stalingrad**
**F-92109 Boulogne Billancourt Cédex(FR)**

(54) **Dispositif de commande hydromécanique de distribution d'un débit de fluide.**

(57) Dispositif de commande hydromécanique de distribution d'un débit de fluide dans lequel un moteur électrique (1) entraîne une pompe (11) de mise en pression d'un récepteur hydraulique (20), caractérisé par le fait que l'arbre (3) du moteur (1) contrôle un moyen de commande (13) de décompression dudit récepteur (20) , dans le but d'éviter la modification d'état dudit récepteur pendant les arrêts de fonctionnement du moteur (1) et de la pompe (11) ou de permettre la décompression dudit récepteur (20) pendant l'inversion du sens de rotation de l'arbre (3) du moteur.

FIG.1

## DISPOSITIF DE COMMANDE HYDROMECANIQUE DE DISTRIBUTION D'UN DEBIT DE FLUIDE

L'invention concerne un dispositif de commande hydromécanique de distribution d'un débit'de fluide qui assure la mise en pression de récepteurs hydrauliques à simple effet tels que des vérins, des cylindres de frein ou d'embrayage.

L'invention concerne également un circuit hydraulique comportant un générateur de débit constitué par une pompe hydraulique volumétrique, à un ou deux sens de débit, entraînée par un moteur électrique dont le sens de rotation et la grandeur du couple sont pilotés par un circuit électronique, notamment à partir d'une valeur de consigne.

Dans un tel circuit hydraulique, la mise en pression du récepteur est obtenue par le débit généré par la pompe. La pression atteinte en régime stabilisé au niveau du récepteur est sensiblement proportionnelle au couple délivré par le moteur.

Dans le cas d'une pompe hydraulique à deux sens de circulation du fluide telle qu'une pompe à engrenages externes: la décompression du récepteur est obtenue par suite de l'inversion du sens de rotation du moteur qui inverse le sens du débit du fluide.

Un tel circuit hydraulique est connu par la publication FR-A 2 620 097. Un problème rencontré dans ce circuit réside en ce que l'énergie est consommée lors des cycles de maintien en pression du circuit sans déplacement du récepteur.

Cette consommation se traduit par un échauffement non souhaité du moteur électrique et de la pompe hydraulique.

Par contre, lorsque la pompe à un seul sens de débit, telle qu'une pompe à pistons à distribution par clapet, un dispositif additionnel doit être prévu pour assurer la commande de décompression du récepteur.

L'invention a pour objet un dispositif de commutation d'un débit de fluide en fonction du sens de rotation de l'arbre de la pompe d'un circuit hydraulique.

Un autre objet de l'invention est d'assurer l'isolation du récepteur hydraulique en l'absence de rotation de l'arbre et le maintien en pression dudit récepteur sans consommation énergétique.

L'invention a également pour objet la commande de commutation du débit de fluide et de l'isolation du récepteur par l'intermédiaire d'un dispositif de contrôle du couple délivré par le moteur.

Un dispositif de commande hydromécanique de distribution d'un débit de fluide dans lequel un moteur électrique entraîne une pompe de mise en pression d'un récepteur hydraulique est caractérisé par le fait que l'arbre du moteur contrôle un moyen d'actionnement mécanique d'un clapet de décompression du récepteur ; dans le but d'éviter la modification d'état dudit récepteur pendant les arrêts de fonctionnement du moteur et de la pompe ou de permettre la décompression dudit récepteur pendant l'inversion du sens de rotation de l'arbre du moteur.

D'autres caractéristiques et avantages du dispositif apparaîtront à la lecture de la description d'exemples de réalisation de celui-ci faite en référence au dessin annexé dans lequel :

- La figure 1 est une représentation schématique du dispositif de commande d'un récepteur hydraulique par une pompe à deux sens de débit,
- La figure 2 est une représentation schématique du dispositif de commande d'un récepteur hydraulique par une pompe à un sens de débit,
- La figure 3 est une représentation schématique de la commande séquentielle du clapet de décompression en application au circuit représenté à la figure 1,
- La figure 4 est une représentation schématique d'une variante de la commande représentée à la figure 3,

On désignera, ci-après, les composants homologues des circuits par les mêmes références dont le rôle apparaîtra à la lecture du mode de fonctionnement du dispositif.

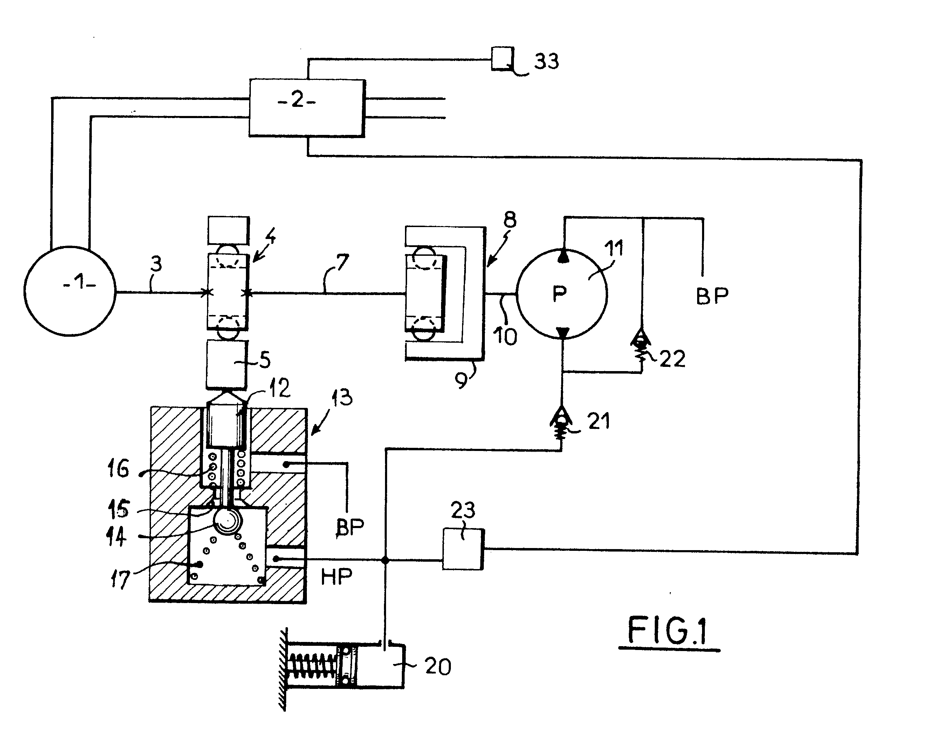

Le dispositif représenté a la figure 1 montre schématiquement un moteur électrique 1 alimenté à partir d'un circuit de traitement 2 qui transforme les signaux fournis par des capteurs tel qu'un capteur 33 délivrant un signal représentatif d'une pression de consigne et un capteur 23 délivrant un signal représentatif de la pression effective d'un récepteur hydraulique.

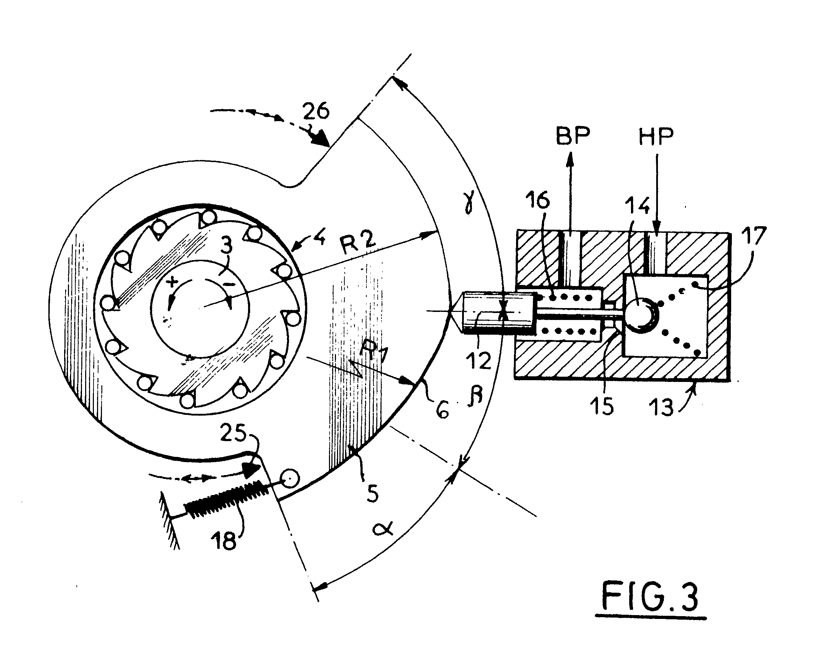

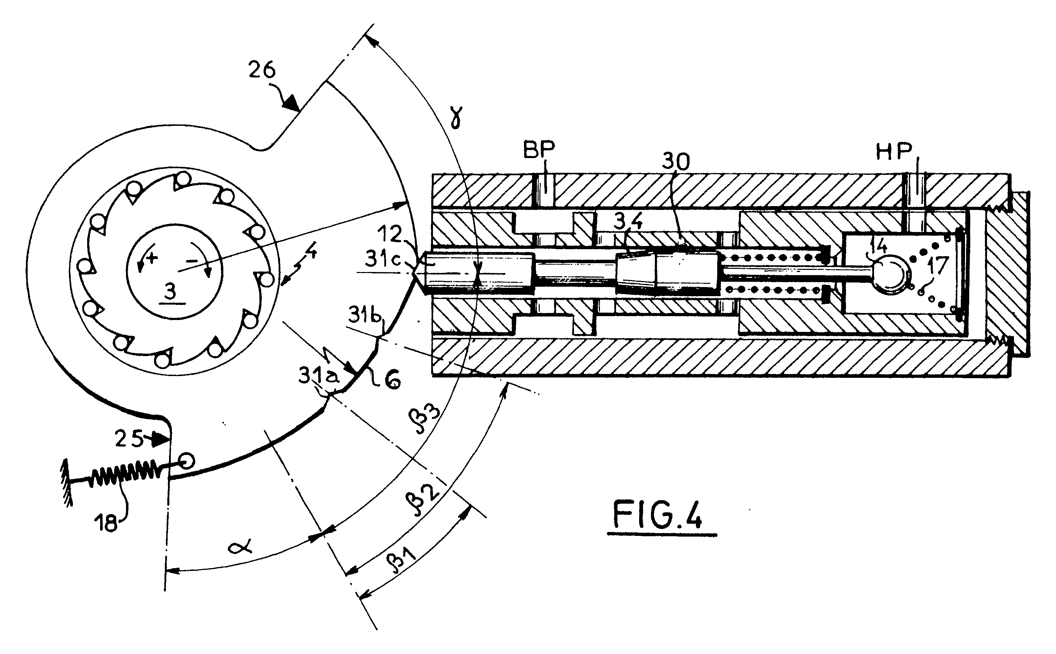

Sur l'arbre 3 du moteur 1 est monté un premier embrayage unidirectionnel tel qu'une roue libre 4 dont la partie menée est constituée par une came 5 à ressort de rappel 18 et à course limitée par des butées mobiles 25, 26 dont le profil évolutif 6 est défini par des secteurs angulaires de rayon $R_1$ et $R_2$ et par des angles $\alpha$, $\beta$, $\tau$ et ou $\alpha$, $\beta1$, $\beta2$, $\beta3$, $\tau$ ainsi que cela est représenté aux figures 3 et 4.

L'arbre 3 se prolonge par un arbre d'entraînement 7 d'un deuxième embrayage unidirectionnel tel qu'une roue libre 8 dont la partie menée 9 est accouplée à 1'arbre 10 d'entraînement de la pompe 11.

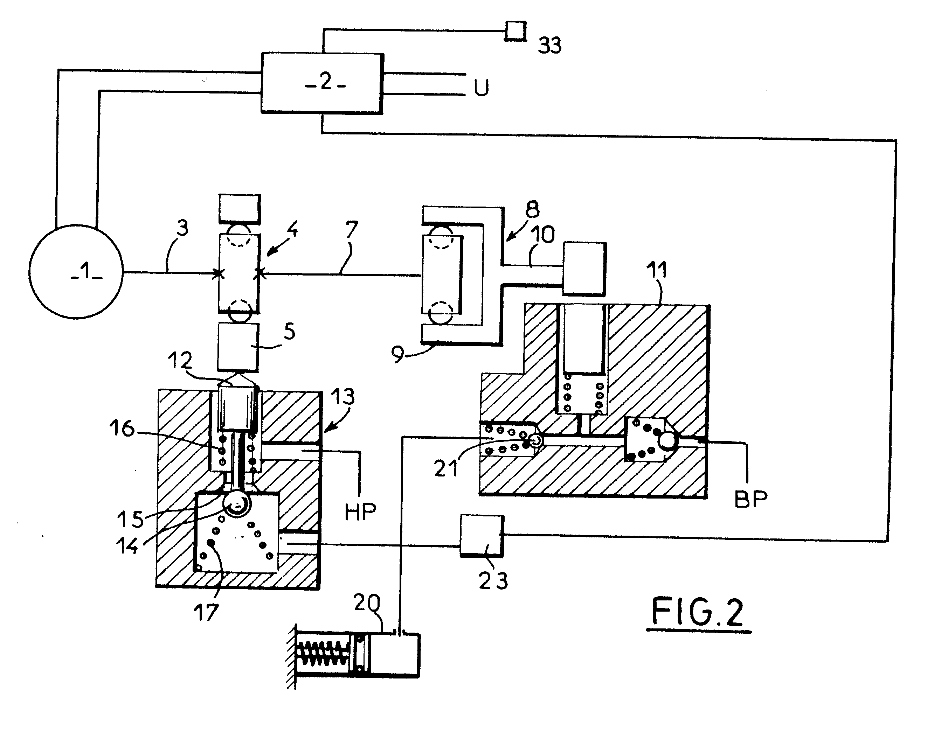

La pompe 11 peut être constituée, soit par une pompe volumétrique à deux sens de débit ainsi que représentée à la figure 1, ou par une pompe à clapets représentée schématiquement à la figure 2.

La came 5 du moteur 1 est en appui sur un doigt 12 à ressort 16 de section constante ou variable d'actionnement d'un clapet de commande séquentiel 13 constitué par exemple selon les exemples décrits par une bille 14 susceptible de venir reposer sur son siège 15 sous l'action d'un ressort de rappel 17.

Le clapet 13 est branché, ainsi que cela est représenté sur les figures 1 et 2, sous la forme d'un clapet de décharge (fig. 3) ou d'un clapet de décharge avec étranglement (fig. 4).

La pompe 11 alimente le récepteur hydraulique tel qu'un vérin 20 à simple effet à rappel par ressort qui actionne une charge.

Le circuit hydraulique comporte une voie haute pression HP et une voie basse pression BP sur lesquelles sont branchés des clapets anti-retour 21, 22 et un capteur de pression 23 délivrant un signal au circuit de traitement 2.

Le mode de fonctionnement du dispositif sera décrit en référence à la figure 3 sur laquelle ont été repérés par les signes + et - les sens de rotation anti-horaire et horaire de l'arbre 3 du moteur.

Le fonctionnement du dispositif de commande se réfère aux figures 1 et 2.

Lorsque l'arbre 3 tourne dans le sens -, la roue libre 4 assure la rotation libre de l'arbre 3 par rapport à la came 5. Le ressort 18 taré de manière adéquate ramène la came 5 sur une butée 25. La came 5 parcourt l'angle $\beta$ et son rayon externe passe de la valeur R2 à la valeur R1 (R1 < R2). Le doigt 12 se déplace sur une course R2 - R1 sous l'action des ressorts 16 et 17 et libère la bille 14 qui obture le siège 15. On isole ainsi la HP de la BP.

Lorsque l'arbre 3 tourne dans le sens +, la roue libre 4 entraîne la came 5. Le couple moteur agit à l'encontre du ressort 18 et amène la came sur la butée 26. La came parcourt l'angle p, son rayon externe passe de R1 à R2, le doigt 12 se déplace sur une course R1 - R2 et ouvre le clapet 13, caractérisé par la bille 14, son siège 15 et le ressort 17. Le maintien du couple sur l'arbre assure l'ouverture permanente du clapet 13 et la liaison libre entre la HP et la BP.

Lorsque le clapet 13 se ferme, la came parcourant l'angle $\beta$ dans le sens +, il est utile de prévoir sur le profil de la came 5 un déplacement angulaire supplémentaire $\alpha$ de rayon constant R1 afin d'éviter les phénomènes de rebord de la came sur la butée 26. A cet effet, cette dernière est montée mobile et parcourt te même secteur angulaire $\alpha$. Durant ce déplacement angulaire supplémentaire on obtient l'arrêt de l'arbre 3 par l'intermédiaire du circuit 2.

D'une manière analogue à l'ouverture du clapet 13, la came parcourant l'angle $\beta$ dans le sens -, il est utile de prévoir sur le profit de la came 5 un déplacement angulaire supplémentaire $\tau$ à rayon constant R2 afin d'éviter les phénomènes de rebond de la came sur la butée 25. A cet effet, cette dernière est montée mobile et parcourt le même secteur angulaire $\tau$. Durant ce déplacement angulaire supplémentaire on obtient l'arrêt de l'arbre 3 par l'intermédiaire du circuit 2.

On a ainsi réalisé un dispositif qui permet d'ouvrir ou de fermer le clapet 13 en fonction du sens de rotation de l'arbre et consécutivement d'isoler ou de mettre en communication la HP et la BP.

Selon l'exemple de fonctionnement de la figure 4, le couple moteur sur l'arbre 3 agit dans le sens déterminé par la roue libre 4 et entraîne la came 5 vers une position angulaire à l'encontre du couple antagoniste fourni par le ressort de rappel 18. A chaque position de ta came 5, correspond une position du doigt d'actionnement 12 par rapport à son fourreau guide 30. Des positions préférentielles ($\beta1$, $\beta2$, $\beta3$) sont prédéterminées par des crans 31a, 31b, 31c sur la came 5. A chaque position correspond une section de passage de fluide entre le fourreau guide 30 et le doigt 12 à section 34 variable de configuration conique.

Lorsque l'on souhaite accroître la pression au niveau du récepteur 20, on impose au circuit de traitement 2 une tension de consigne U croissante délivrée par le capteur 33. Le circuit 2 détecte un défaut de pression à l'aide du capteur de pression 23 et impose alors un courant au moteur 1 de façon à obtenir un couple sur l'arbre 3 dans le sens qui libère le dispositif à roue libre 4 et enclenchera le dispositif à roue libre 8.

Le clapet 13 se ferme et la pompe 11 génère un débit de la basse pression vers le récepteur 20. Ce débit engendre une pression en fonction de la caractéristique $\frac{dP}{dV}$ (Pression/Volume) du récepteur

Lorsque le circuit 2 reçoit le signal de pression égal à la valeur de consigne délivrée par le capteur de pression 23, l'alimentation du moteur 1 est interrompue. La pompe 11 s'arrête et la pression est maintenue au niveau du récepteur 20 par le clapet anti-retour 21 sans consommation d'énergie.

Si l'on souhaite diminuer la pression dans le récepteur 20, on diminue la tension de consigne délivrée par le capteur 33. A partir de la grandeur du signal du capteur de pression 23, le circuit 2 reçoit un signal correspondant à un excédent de pression, et impose alors au moteur 1 une tension qui permet d'inverser le sens du couple sur l'arbre 3. Le dispositif 4 est débrayé et le dispositif 8 est embrayé.

La pompe 11 s'arrête et le clapet 13 s'ouvre. La pression du récepteur 20 diminue jusqu'à la valeur de consigne. Le boîtier électronique 2 annule et inverse la tension du moteur 1 jusqu'à obtenir l'arrêt de la décompression du récepteur 20.

## Revendications

1. Dispositif de commande hydromécanique de distribution d'un débit de fluide dans lequel un moteur électrique (1) entraîne une pompe (11) de mise en pression d'un récepteur hydraulique (20), caractérisé par le fait que l'arbre (3) du moteur (1) contrôle un moyen de commande (13) de décompression dudit récepteur (20), dans le but d'éviter la modification d'état dudit récepteur pendant les arrêts de fonctionnement du moteur (1) et de la pompe (11) ou de permettre la décompression dudit récepteur (20) pendant l'inversion du sens de rotation de l'arbre (3) du moteur.

2. Dispositif selon la revendication 1, caractérisé par le fait que l'arbre (3) du moteur est relié à une came (5) par l'intermédiaire d'un embrayage (4) unidirectionnel, dans le but de déplacer sélectivement ladite came (5) en fonction du sens de rotation de l'arbre (3) et d'agir sur un clapet (13) d'isolation des circuits haute et basse pression du récepteur hydraulique (20).

3. Dispositif selon la revendication 2, caractérisé par le fait que la came (5) porte des crans (31a, b, c) dans le but d'obtenir des positions du clapet (13) d'isolation aptes à modifier le débit d'écoulement du fluide entre la haute et la basse pression.

4. Dispositif selon l'une quelconque des revendications 1 à 3, caractérisé par le fait que le moteur électrique est associé à un moyen de contrôle électronique du couple et du sens de rotation dans le but de moduler la pression du récepteur hydraulique.

FIG.1

FIG.2

FIG.3

FIG.4

# RAPPORT DE RECHERCHE EUROPEENNE

Numéro de la demande

**EP 90 40 3345**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 139 362 (G.L. REXROTH GMBH)<br>* page 5, ligne 1 - page 6, ligne 1; figure *<br>— — — | 1 | G 05 D<br>16/20<br>F 04 B 49/02 |
| A,D | FR-A-2 620 097 (REGIE NATIONALE DES USINES RENAULT)<br>* abrégé; figure 1 *<br>— — — — — | 1 | |

### DOMAINES TECHNIQUES RECHERCHES (Int. Cl.5)

G 05 D
F 04 B

Le présent rapport de recherche a été établi pour toutes les revendications

| Lieu de la recherche | Date d'achèvement de la recherche | Examinateur |
|---|---|---|
| La Haye | 04 avril 91 | HELOT H.V. |